# EUROPEAN PATENT APPLICATION

(11) **EP 1 146 258 A1**
(43) Date of publication of application: **17.10.2001**
(21) Application number: 01105697.5
(22) Date of filing: 07.03.2001
(51) Int. Cl.: F16H 61/02

(54) **Automatic transmission of vehicle**

(30) Priority: 31.03.2000 JP 2000101319
(71) Applicant: ISUZU MOTORS LIMITED, Shinagawa-ku, Tokyo (JP)
(72) Inventor: Nobuyuki, Nishimura, c/o Isuzu Motors Limited, Kawasaki-shi, Kanagawa (JP)
(74) Representative: Schaumburg, Thoenes & Thurn

(57) **Abstract**

A transmission (3) has a reverse gear with high and low speeds, and also has a normal shift mode for gear by gear shifting and a skip shift mode for plural-gear by plural-gear shifting. A switch (25) for selecting the shift mode is provided, which is operated manually by a driver. A controller (9) selects the low speed reverse when the normal shift mode is selected, and selects the high speed reverse when the skip shift mode is selected. The controller (9) may prohibit the shifting to the reverse gear unless vehicle speed is zero.

## Description

The instant application claims priority of Japanese Patent Application No. 2000-101319 filed on March 31, 2000, the entire disclosure of which is incorporated herein by reference.

The present invention relates to an automatic transmission apparatus loaded on a large vehicle such as a tractor-trailer.

Recently, many large vehicles such as tractor-trailers, trucks and lorries are equipped with an automatic clutch and automatic transmission in order to lighten a driver's burden. A controller associated with the automatic transmission selects a most appropriate transmission gear from a map in accordance with vehicle speed, and automatically shifts the transmission up and down in response to acceleration and deceleration of the vehicle.

Since the large vehicle often carries a heavy load, its transmission has a number of gear positions, e.g., ten or more. Such multiple-stage transmission includes a main gear assembly and auxiliary gear assemblies such as a splitter assembly and a range gear assembly.

If a reverse position of such multiple-stage transmission can be changed between high and low speeds in correspondence to high and low positions of the auxiliary transmission, it is convenient. However, generally there is only one shift lever, and a driver is only allowed to move this shift lever into a single reverse position. Therefore, how to switch between the high speed reverse and low speed reverse is a question. Providing a plurality of reverse positions for the shift lever is not practical. Providing an additional (or separate) switch unit increases a manufacturing cost and the number of parts.

An object of the present invention is to provide an arrangement that is simple but can switch between high and low speeds of the reverse gear.

According to one embodiment of the present invention, there is provided an automatic transmission apparatus of a vehicle including a transmission having a reverse gear with high and low speeds and operable in a normal shift mode and a skip shift mode, a control unit for controlling shifting of the transmission, an actuator for shifting the transmission based on a signal from the control unit, a switch for selecting the normal or skip shift mode, and a second control unit for automatically selecting the high speed reverse or low speed reverse based on selection of the normal or skip shift mode. In the normal shift mode, the shifting takes place one gear at a time. In the skip shift mode, the shifting occurs every other gear or more. Since the high and low speed reverse is switched according to the shift mode of the transmission, a separate switch for the high-low speed reverse is not required.

The second control unit may select the low speed reverse when the normal shift mode is selected, and select the high speed reverse when the skip shift mode is selected. The switch may be a manual switch turned on and off by a driver. The second control unit may prohibit the shifting to the reverse gear unless vehicle speed is zero. The transmission may include an auxiliary gear assembly, and switching between the high and low speed reverse may take place in accordance with high and low positions of the auxiliary gear assembly. The auxiliary gear assembly may be a splitter gear assembly located between a main gear assembly and a clutch, or a range gear assembly located between the main gear assembly and a propeller shaft.

Other objects, aspects and advantages of the present invention will become apparent to those skilled in the art to which the invention pertains from the subsequent detailed description and the appended claims, taken in conjunction with the accompanying drawings.

Figure 1 illustrates a flowchart of switching between high speed reverse and low speed reverse according to the present invention;

Figure 2 illustrates an automatic transmission apparatus of a vehicle;

Figure 3 illustrates a transmission employed in the apparatus shown in Figure 2;

Figure 4 illustrates an automatic clutch employed in the apparatus shown in Figure 2;

Figure 5 illustrates a shift up map; and

Figure 6 illustrates a shift down map.

An embodiment of the present invention will now be described with reference to the accompanying drawings.

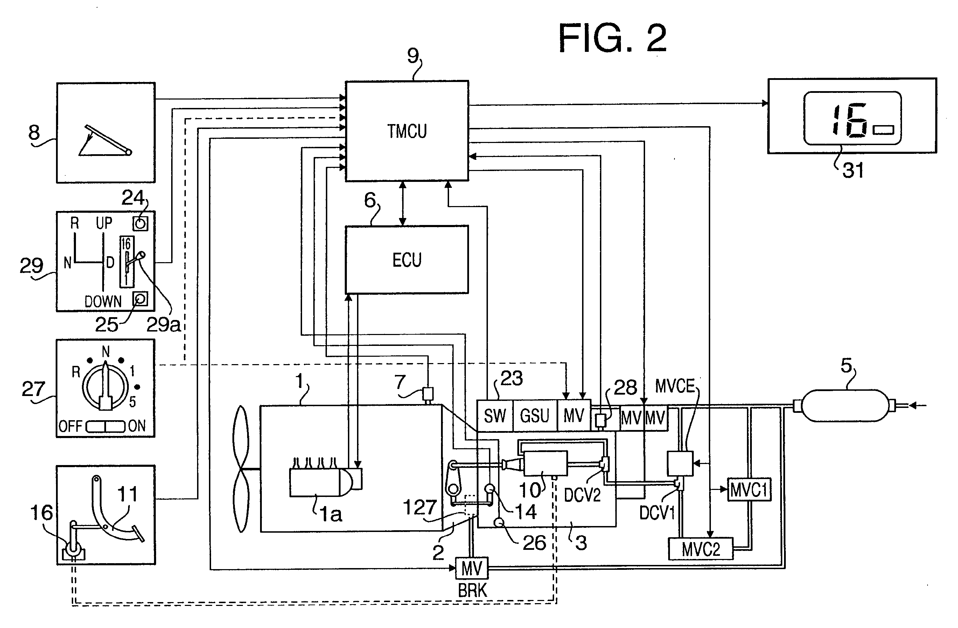

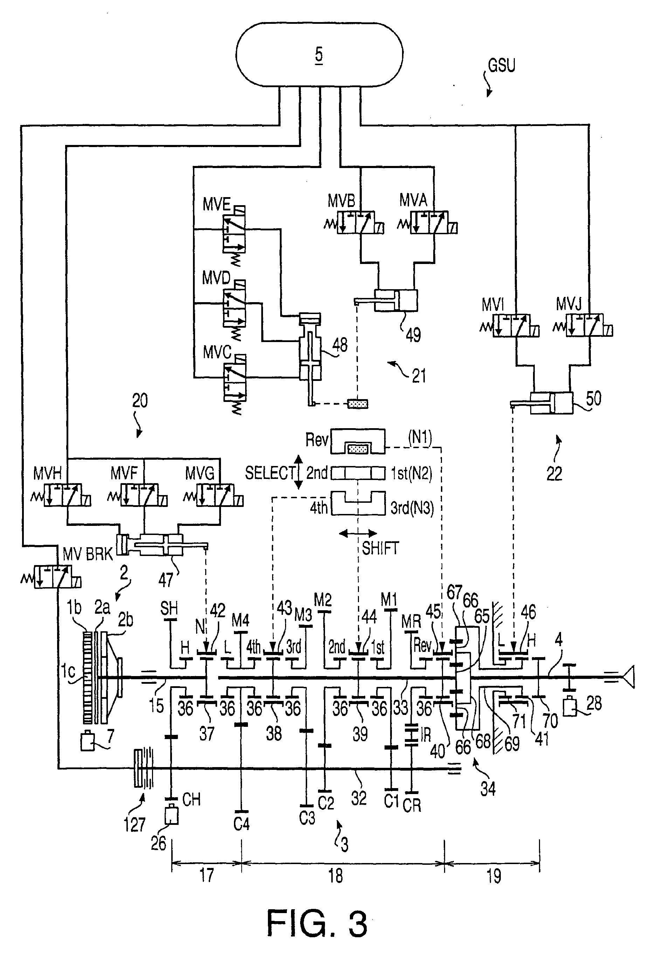

Referring first to Figure 2, illustrated is an automatic transmission 3 according to the present invention, which is incorporated in a tractor-trailer with a diesel engine 1. The transmission 3 is coupled with the engine 1 via a clutch 2, and an output shaft 4 (Figure 3) of the transmission 3 is connected to a propeller shaft (not shown) to drive rear wheels of the vehicle (not shown). The engine 1 is electronically controlled by an engine control unit (ECU) 6. Specifically, ECU 6 reads a current engine revolution speed and engine load from outputs of an engine rotation sensor 7 and accelerator opening sensor (accelerator pedal depression sensor) 8, and determines primarily from these outputs timing and an amount of fuel injection of a fuel injection pump 1a.

As illustrated in Figure 3, a flywheel 1b is mounted on a crankshaft of the engine 1, and a ring gear 1c is formed along the periphery of the flywheel 1b. As the teeth of the ring gear 1c pass by the engine revolution speed sensor 7, the sensor 7 outputs pulses. ECU 6 counts the number of the pulses per unit time to calculate the engine revolution speed.

Referring back to Figure 2, both the clutch 2 and transmission 3 are automatically controlled by a transmission control unit (TMCU) 9. ECU 6 and TMCU 9 are connected to each other over a bus so that they communicate with each other.

As illustrated in Figures 2, 3 and 4, the clutch 2 is a mechanical friction clutch, and includes the flywheel 1b (input part of the clutch), a driven plate 2a (output part of the clutch), and a pressure plate 2b for frictionally contacting the driven plate 2a with the flywheel 1a and leaving the driven plate from the flywheel. The clutch 2 has a clutch booster 10 to cause the pressure plate 2b to move in an axial direction. The clutch 2 is generally disengaged and engaged in an automatic manner to lighten a driver's burden. When the clutch 2 should be operated delicately, e.g., when the vehicle is moved backward at a very slow speed, and when the clutch 2 should be disengaged suddenly, e.g., in an emergency case, it is also possible to disengage and engage the clutch 2 manually upon stamping of a clutch pedal 11. Thus, this is a so-called selective automatic clutch. A clutch stroke sensor 14 is provided for detecting a stroke of the clutch itself (i.e., position of the pressure plate 2b), and a clutch pedal stroke sensor 16 is provided for detecting how deep the clutch pedal 11 is stamped. These sensors 14 and 16 are also connected to TMCU 9.

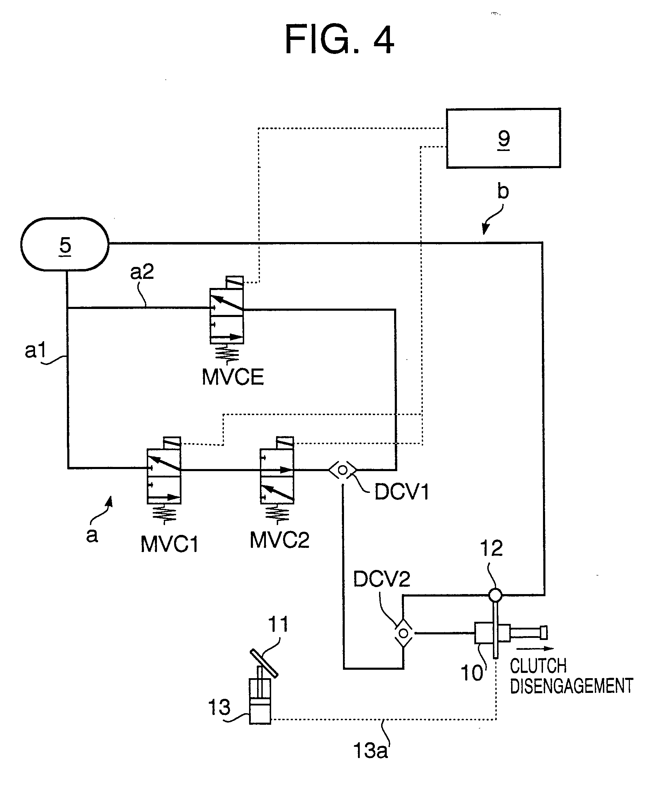

As best illustrated in Figure 4, the clutch booster 10 is connected to an air tank 5 via two air pipes "a" and "b" as indicated by the solid line, so that the clutch booster 10 is pneumatically activated by the air pressure supplied from the air tank 5. One of the air pipes "a" is used for automatic clutch disengagement and engagement, and the other air pipe "b" is used for manual clutch disengagement and engagement. The air pipe "a" is divided to two branch lines a1 and a2. On the first branch line a1, provided in series are two electromagnetic valves MVC1 and MVC2 for automatic disengagement and engagement. On the second branch line a2, provided is an electromagnetic valve MVCE for emergency case. At a position where these branch lines a1 and a2 meet, a double check valve DCV1 is provided. The air pipe "b" has a hydraulic valve 12 which is associated with the clutch booster 10. Another double check valve DCV2 is provided at a position where the air pipes "a" and "b" encounter. Each of the double check valves DCV1 and DCV2 is a three-way valve which is activated by differential pressure.

The electromagnetic valves MVC1, MVC2 and MVCE are turned on and off under the control of TMCU 9. When turned on, the electromagnetic valve connects its upstream side to the downstream side. When turned off, the electromagnetic valve blocks up the air so that the upstream side is disconnected from the downstream side, and the downstream side is released to the atmosphere. First, the automatic clutch operation will be described. The electromagnetic valve MVC1 is simply turned on and off in accordance with on and off of an ignition key. When the ignition key is in an off position, i.e., the vehicle is stopped, the electromagnetic valve MVC 1 is turned off and interrupts the air pressure from the air tank 5. The electromagnetic valve MVC2 is a proportional control valve and able to arbitrarily control an amount (or flow rate) of air to be fed and discharged. This electromagnetic valve is needed to control a speed of clutch disengagement and engagement. When both the electromagnetic valves MVC 1 and MVC2 are turned on, the air pressure of the air tank 5 causes the double check valves DCV1 and DCV2 to switch so that the air pressure is supplied to the clutch booster 10. This disengages the clutch. In order to engage the clutch, the electromagnetic valve MVC2 is only turned off. This allows the air pressure to escape from the clutch booster 10 via the electromagnetic valve MVC2.

If abnormality occurs in either the electromagnetic valve MVC1 or MVC2 during clutch disengagement and that electromagnetic valve is turned off, the clutch is suddenly engaged in opposition to the driver's intent. Thus, if such abnormality is detected by an abnormality diagnosis circuit of TMCU 9, the electromagnetic valve MVCE is immediately turned on. This causes the air pressure passing through the electromagnetic valve MVCE to switch the double check valve DCV1 to the opposite side so that the air pressure is supplied to the clutch booster 10. As a result, the clutch disengaged condition is maintained and the sudden clutch engagement is prevented.

Next, the manual mode will be described. The hydraulic pressure is fed from and returned to the master cylinder 13 upon stamping and releasing of the clutch pedal 11. The hydraulic pressure is fed to the hydraulic valve 12 via an oil line 13a as indicated by the broken line to open and close the hydraulic valve 12 and in turn to feed and release the air pressure to and from the clutch booster 10 for manual disengagement and engagement of the clutch 2. As the hydraulic valve 12 is opened, the air pressure passing therethrough causes the double check valve DCV2 to switch so that the air pressure reaches the clutch booster 10. It should be noted that when the automatic clutch disengagement and engagement interferes with the manual clutch disengagement and engagement, priority is given to the manual disengagement and engagement in this embodiment.

As illustrated in Figure 3 in detail, the transmission 3 is a basically "always engaged" type of multi-stage transmission, and has sixteen forward gear positions and two backward gear positions. The transmission 3 has a splitter assembly 17 as an auxiliary transmission on its input side, a range gear assembly 19 as another auxiliary transmission on its output side, and a main gear assembly 18 between these two auxiliary gear assemblies. The transmission 3 transfers a drive power of the engine 1 from the input shaft 15 to the splitter 17, main gear assembly 18, range gear assembly 19 and output shaft 4 in this order.

A gear shift unit GSU is provided for automatically shifting the transmission 3. GSU includes a splitter actuator 20, main gear actuator 21 and range gear actuator 22 for shifting the splitter assembly 17, main gear assembly 18 and range gear assembly 19 respectively. Like the clutch booster 10, these actuators 20 to 22 are also pneumatically driven under the control of TMCU 9. A current gear position of each of the gear assemblies 17, 18 and 19 is detected by an associated gear position switch 23 (Figure 2). The rotation speed of the counter shaft 32 is detected by a counter shaft rotation sensor 26, and that of the output shaft 4 is detected by an output shaft rotation sensor 28. These detection signals are fed to TMCU 9.

The automatic transmission described above also possesses a manual mode so that the transmission can be shifted up and down in response to a shift lever movement caused by the driver. In the manual mode, as illustrated in Figure 2, a gear position change signal issued from a shift lever unit 29 located next to a driver' seat triggers disengagement and engagement of the clutch 2 and gear position change of the transmission 3. Specifically, when the driver moves a shift lever 29a of the shift lever unit 29 to a certain gear position, a shift switch installed in the shift lever unit 29 is turned on to output the gear position change signal to TMCU 9. Upon receiving this signal, TMCU 9 selectively and/or cooperatively causes the clutch booster 10, splitter actuator 20, main gear actuator 21 and range gear actuator 22 to operate so as to perform a series of shift up (or down) operations (clutch disengagement, gear disengagement, gear engagement and clutch engagement). TMCU 9 also causes a monitor 31 to display a current gear position.

In the shift lever unit 29, "R" represents reverse, "N" neutral, "D" drive, "UP" shift up, and "DOWN" shift down. The shift switch generates and outputs signals corresponding to these positions respectively. There is only one reverse position. Next to the driver' seat, also provided are a mode switch 24 for switching of shift mode between the manual mode and automatic mode, and a skip switch 25 for switching between gear-by-gear shifting (normal mode) and every other gear shifting (skip mode). These switches are manual switches. The skip switch 25 is a selection device of the invention.

In the automatic shift mode, if the shift lever 29a is in the D range, the transmission is automatically shifted up and down in accordance with the vehicle speed. It should be noted that even in the automatic shift mode, if the driver moves the shift lever 29a to UP or DOWN, the transmission is manually shifted. In the automatic shift mode, if the skip switch 25 is turned off (normal mode), the transmission gear position change takes place one gear at a time. This is advantageous when a tractor tows a trailer with a relatively heavy load. When the skip switch 25 is turned on (skip mode), the gear position change occurs every other gear (e.g., from first gear to third gear). This is advantageous when the tractor does not tow the trailer or tows the trailer with a relatively light load.

On the other hand, when the manual shift mode is selected, the gear position change is effected completely according to the driver's intention. When the shift lever 29a is in the D range, no gear position takes place and a current gear position is maintained. Only when the driver operates the shift lever 29a to UP or DOWN, the transmission 3 is shifted up or down. If the skip switch 25 is turned off, the gear position change occurs one gear by one gear. If the skip switch 25 is turned on, the gear position change occurs every other gear. In this mode, the D range is an H (hold) range to keep a current gear position.

An emergency shift switch 27 is also provided in the vicinity of the driver' seat. In case an electromagnetic valve of GSU fails, for instance, the driver presses an ON button and turns a knob to shift the transmission 3.

As illustrated in Figure 3, the transmission 3 includes the input shaft 15, main shaft 33 and output shaft 4 that are arranged coaxially, and a counter shaft 32 that extends below and in parallel to these shafts. The input shaft 15 is coupled to the driven plate 2a of the clutch 2. The input shaft 15 and main shaft 33 are supported such that they can rotate relative to each other.

Next, the structures of the splitter assembly 17 and main gear assembly 18 will be described. A split high gear SH is rotatably mounted on the input shaft 15. Gears M4, M3, M2, M1 and MR are rotatably mounted on the main shaft 33 in this order from the front. These gears SH, M4, M3, M2 and M1 except for the gear MR always mesh with counter gears CH, C4, C3, C2 and C1 fixed on a counter shaft 32 respectively. The gear MR always meshes with an idle reverse gear IR, and the idle reverse gear IR always meshes with a counter gear CR secured on the counter shaft 32.

The gears SH, M4,...mounted on the input shaft 15 and main shaft 33 have splines 36 for selection of themselves. In the vicinity of these splines 36, provided are first to fourth splines 37 to 40 fixed to the input shaft 15 and main shaft 33. First to fourth sleeves 42 to 45 always engage with the first to fourth splines 37 to 40 such that they can slide back and forth. By selectively sliding the first to fourth sleeves 42 to 45 to cause them to engage with and disengage from the splines 36 of the gears, a particular transmission gear is selected or the transmission is brought into a neutral condition (geared in and out). Movement of the first sleeve 42 is caused by the splitter actuator 20, and those of the second to fourth sleeves 43 to 45 are caused by the main actuator 21.

In this manner, the splitter assembly 17 and main gear assembly 18 have an "always-engaged" type structure that is automatically shifted up and down by the associated actuators 20 and 21. It should be noted that a spline portion of the splitter assembly 17 has an ordinary mechanical synchronization unit, but that of the main gear assembly 18 does not. Because of this, a so-called synchronization control is performed so that the shifting can be made without the synchronization unit. Here, not only the main gear assembly 18 but also the splitter gear assembly 17 have a neutral position to prevent rattle noise of gears. The detail of the neutral position of the splitter gear assembly can be found in Japanese Patent Application No. 11-319915.

Next, the range gear assembly 19 will be described. The range gear assembly 19 has a planetary gear mechanism 34 and is shiftable to a high or low position. The planetary gear mechanism 34 includes a sun gear 65 secured on the rear end of the main shaft 33, a plurality of planetary gears 66 meshing with the outer periphery of the sun gear, and a ring gear 67 having inner teeth in mesh with the planetary gears 66. The planetary gears 66 are rotatably supported by a common carrier 68 that is connected to the output shaft 4. The ring gear 67 has a tubular portion 69 that is rotatably fit over the output shaft 4. The tubular portion 69 and the output shaft 4 constitute a double shaft structure.

A fifth spline 41 extends from the tubular portion 69. Closely behind the fifth spline 41, provided is an output shaft spline 70 extending from the output shaft 4. In close front of the fifth spline 41, provided is a stationary spline 71 fixed to the transmission casing. A fifth sleeve 46 always meshes with the fifth spline 41 such that it can slide back and forth. Movement of the fifth sleeve 46 is controlled by the range gear actuator 22. Spline portions of the range gear assembly 19 have synchronization mechanisms.

When the fifth sleeve 46 moves forwards, it engages with the fixed spline 71 so that the fifth spline 41 is coupled to the fixed spline 71. This causes the ring gear 67 to be secured on the transmission casing and the output shaft 4 is caused to rotate at a reduction ratio greater than one (e.g., 4.5). This is the low gear position.

On the other hand, if the fifth sleeve 46 moves backwards, it engages with the output shaft spline 70 so that the fifth spline 41 is coupled with the output shaft spline 70. As a result, the ring gear 67 and carrier 68 are fixed relative to each other, and the output shaft 4 is directly rotated at a reduction ratio of one. This is the high gear position.

As described above, the transmission 3 has two gear positions (high and low gear positions) in the splitter assembly 17, four gear positions in the main gear assembly 18, and two gear positions (high and low) in the range gear assembly 19 when the vehicle moves forwards. In sum, the transmission 3 can be shifted from the first to the sixteenth gear positions (2 x 4 x 2 = 16).

When the vehicle moves backwards, the reverse is selected in the main gear assembly 18 and the low gear is selected in the range gear assembly 19. In the splitter 17, the high or low gear is selected. Thus, the reverse position can be switched between two ways, i.e., the high and low gears.

Next, the actuators 20, 21 and 22 will be described. Each actuator includes one or more pneumatic cylinders activated by the air pressure from the air tank 5, and a plurality of electromagnetic valves for switching between application and releasing of the air pressure to and from the pneumatic cylinders. These electromagnetic valves are selectively operated by TMCU 9 so that the pneumatic cylinders are selectively activated.

The splitter actuator 20 includes a pneumatic cylinder 47 and three electromagnetic valves MVH, MVF and MVG. The pneumatic cylinder 47 has a double piston. When the splitter assembly 17 should be in a neutral condition, the electromagnetic valve MVH is turned on, the electromagnetic valve MVF is turned off and the electromagnetic valve MVG is turned on. When the splitter assembly 17 should be shifted to the high gear position, the electromagnetic valve MVH is turned off, the electromagnetic valve MVF is turned off and the electromagnetic valve MVG is turned on. In order to shift the splitter assembly 17 to the low gear position, the electromagnetic valve MVH is turned off, the electromagnetic valve MVF is turned on and the electromagnetic valve MVG is turned off.

The main gear assembly actuator 21 includes a pneumatic cylinder 48 for gear selection, and another pneumatic cylinder 49 for shifting. Three electromagnetic valves MVC, MVD and MVE are associated with the first pneumatic cylinder 48 and two electromagnetic valves MVB and MVA are associated with the second pneumatic cylinder 49. The first pneumatic cylinder 48 has a double piston and the second pneumatic cylinder 49 has a single piston.

When the electromagnetic valve MVC is turned off, the electromagnetic valve MVD is turned on and the electromagnetic valve MVE is turned off, the first pneumatic cylinder 48 is moved downwards in the drawing so that the third or fourth gear or N3 (neutral position between the third and fourth gears) of the main gear assembly can be selected. When the electromagnetic valve MVC is turned on, the electromagnetic valve MVD is turned off and the electromagnetic valve MVE is turned on, the first pneumatic cylinder 48 is moved into the neutral condition so that the first or second gear or N2 (neutral position between the first and second gears) of the main gear assembly can be selected. When the electromagnetic valve MVC is turned on, the electromagnetic valve MVD is turned off and the electromagnetic valve MVE is turned off, the first pneumatic cylinder 48 is moved upwards in the drawing so that the reverse gear or N1 of the main gear assembly is selectable.

The second pneumatic cylinder 49 is brought into the neutral condition when the electromagnetic valve MVA is turned on and the electromagnetic valve MVB is turned on. This allows selection of N1, N2 or N3 of the main gear assembly. When the electromagnetic valve MVA is turned on and the electromagnetic valve MVB is turned off, the pneumatic cylinder 49 is moved to the left in the drawing so that the second, fourth or reverse gear can be selected. When the electromagnetic valve MVA is turned off and the electromagnetic valve MVB is turned on, the pneumatic cylinder 49 is moved to the right so that the first or third gear of the main gear assembly can be selected.

The range gear actuator 21 includes a pneumatic cylinder 50 with a single piston, and two electromagnetic valves MVI and MVJ. The pneumatic cylinder 50 is moved to the right in the drawing when the electromagnetic valve MVI is turned on and the electromagnetic valve MVJ is turned off. This shifts the range gear assembly to the high gear position. On the other hand, the pneumatic cylinder 50 is moved to the left in the drawing when the electromagnetic valve MVI is turned off and the electromagnetic valve MVJ is turned on to shift the range gear assembly to the low gear position.

In order to brake the counter shaft 32 for the above-mentioned synchronization control, the counter shaft 32 is equipped with a counter shaft brake 127. This brake 127 is a wet multiple plate type brake and actuated by the air pressure from the air tank 5. Application and non-application of the air pressure is switched by an electromagnetic valve MV BRK. When the electromagnetic valve MV BRK is turned on, the air pressure is applied to the counter shaft brake 127 to apply a brake force to the counter shaft. When the electromagnetic valve MV BRK is turned off, the air pressure is allowed to escape from the counter shaft brake 127 so that no brake force acts on the counter shaft. More detail of the counter shaft brake can be found in Japanese Patent Application No. 2000-832741.

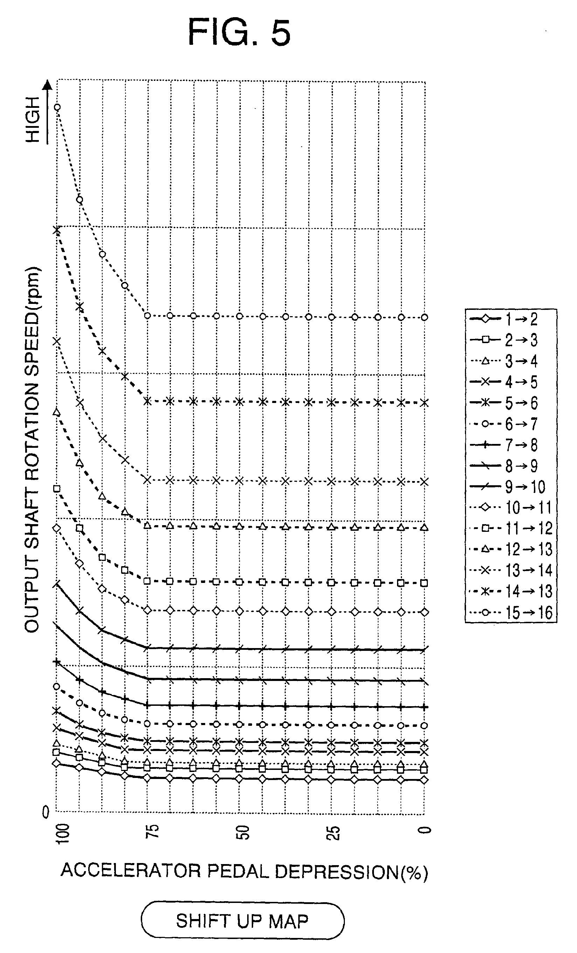

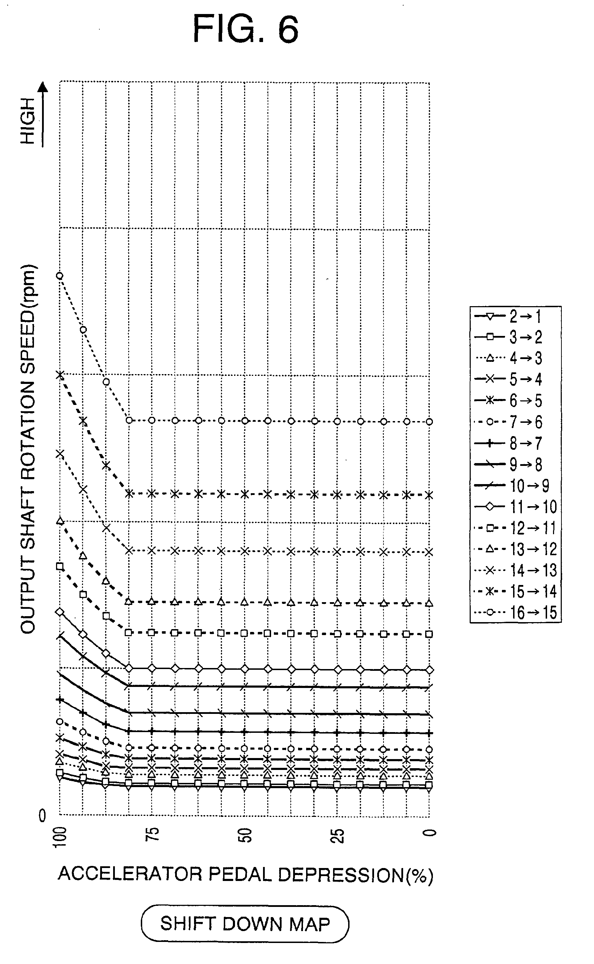

Next, the automatic shift control will be described. TMCU 9 has a shift up map as illustrated in Figure 5 and a shift down map as illustrated in Figure 6 in its memory. In the automatic shift mode, TMCU 9 conducts the automatic shifting according to these maps. For example, in the shift up map of Figure 5, a shift up curve from an n'th gear (n is an integer from one to fifteen) to an n+1'th gear is drawn as a function of an accelerator pedal depression (accelerator opening) (%) and output shaft rotation speed (rpm). In the map, a single point is determined from current accelerator depression and output shaft rotation speed. When the vehicle is accelerated, the rotation speed of the output shaft 4 connected to wheels gradually increases. Therefore, in the normal automatic shift mode, the transmission is shifted up one gear by one gear every time a current point passes a nearest shift up curve. If the skip mode is selected, the transmission is shifted up every other gear as a current point passes a shift up curve above the nearest shift up curve.

Likewise, the shift down map of Figure 6 has a shift down curve from an n+1'th gear to an n'th gear, which is determined from the accelerator pedal depression (%) and output shaft rotation speed (rpm). A single point is defined from current accelerator pedal depression and output shaft rotation speed. When the vehicle is decelerated, the rotation speed of the output shaft 4 gradually drops. In the normal automatic shift mode, therefore, the transmission is shifted down one gear at a time as a current point passes a nearest shift down curve. In the skip mode, the shifting down occurs every other gear.

In the manual mode, the driver can arbitrarily shift up and down the transmission independently of these maps. In the normal mode, a single gear position change operation made by the driver causes the shifting by one gear. In the skip mode, the shifting occurs by two gears upon a single gear position change operation.

Current accelerator depression is detected by an accelerator pedal sensor 8 (Figure 2), and current output shaft rotation speed is detected by the output shaft rotation speed sensor 28. TMCU 9 calculates a current vehicle speed from the current output shaft rotation speed, and indicates it in a speedometer. In this manner, the vehicle speed is indirectly determined from the output shaft rotation speed. The output shaft rotation speed is proportional to the vehicle speed.

The reverse gear of the transmission 3 can be switched between the high and low speeds in accordance with the high and low positions of the splitter assembly 17. This switching is simplified in this embodiment.

Specifically, the high and low speeds of the reverse gear are automatically switched depending upon whether or not the skip shift mode is selected. If the shift mode is the normal mode, the reverse of the transmission 3 is set to the low speed whereas if the shift mode is the skip mode, the reverse gear is set to the high speed. Selection of the skip mode is made by simply turning on of the skip switch 25, which is a manual switch. In short, merely turning on and off the skip switch 25 results in switching between the high and low speeds of the reverse gear.

Since the skip switch is used, there is no need to provide a separate switch or the like to change the reverse gear's high speed to the low speed and vice versa. Therefore, the arrangement for high-low switching of the reverse gear is simple and does not raise a manufacturing cost very much. In general, the driver is expected to turn on and off the skip switch 25 according to the load on the vehicle so as to selectively use the normal and skip shift modes. Naturally, however, when the vehicle carries a relatively heavy load, the normal mode is selected and the low speed reverse is automatically selected. When the load is relatively light, the skip mode is selected and the high speed reverse is selected. In this manner, even if the driver does not pay a special attention to the lightness/heaviness of the vehicle load, the better one (high speed reverse or low speed reverse) is automatically employed, which best suits a current driving condition. This greatly reduces the stress and burden on the driver.

Nevertheless, if the driver wants to select the high speed reverse when the load is heavy and the low speed reverse when the load is light, he or she can do so by operating the skip switch 25.

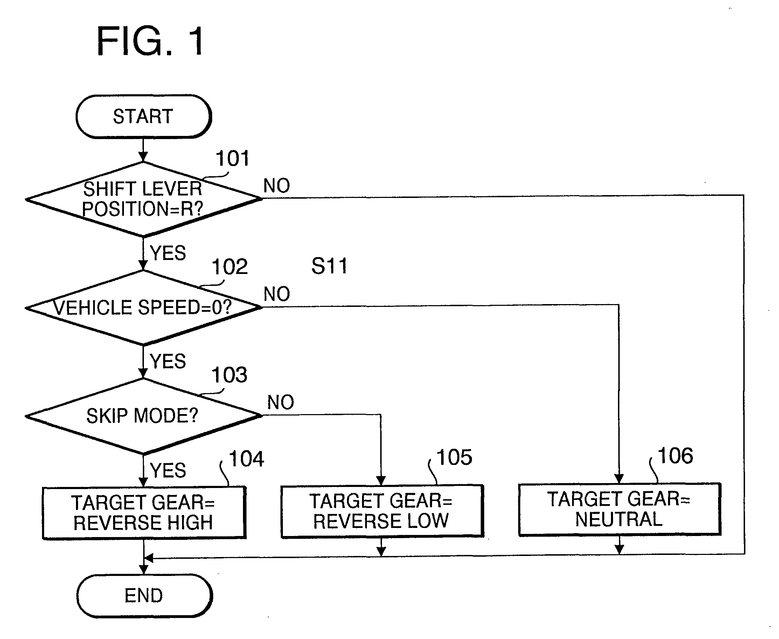

Referring now to Figure 1, illustrated is a flowchart of high-low switching of the reverse gear. TMCU 9 first determines at step 101 whether the shift lever 29a is moved to the reverse position (R) based on the output from the shift switch. If the answer is no, the program goes to end. If the answer is yes, the program proceeds to step 102 to calculate the current vehicle speed from the output of the output shaft rotation sensor 28. If the vehicle speed is zero, the program proceeds to step 103. Otherwise, the program proceeds to step 106.

At step 106, the target gear (transmission gear position to be selected in the next shifting) is set to the neutral (N). Specifically, the shift gate configuration of the shift lever unit 29 of Figure 2 inherently imposes the driver to select the neutral (N) prior to the reverse (R). Further, the neutral condition is encountered before the reverse gear in the transmission. Thus, as far as the vehicle is running at a certain speed, the transmission neutral condition is maintained and the shifting to the reverse is prohibited. This is because if the driver attempts to shift the transmission to the reverse while the vehicle is moving forwards, the transmission may be damaged. It should also be noted that the shifting to the reverse is not admitted while the vehicle is moving backwards. It is only admitted when the vehicle is completely stopped.

When the vehicle speed is zero, it is determined at step 103 whether the current shift mode is the skip mode, i.e., whether the skip switch 25 is turned on. If the skip mode has been selected, the program proceeds to step 104 to set the target gear to the high speed reverse (REVERSE HIGH). Otherwise, the program proceeds to step 105 to set the target gear to the low speed reverse. After that, the shifting to the target gear is conducted according to another flowchart (not shown).

It should be noted that the present invention is not limited to the illustrated and described embodiment. For example, although the high and low speeds of the reverse gear are switched in association with the high and low positions of the splitter assembly 17, it is also satisfactory to use the other auxiliary gear assembly, i.e., the rage gear assembly 19, for the same role. In the skip mode, the shifting may take place three-gear by three-gear or more.

## Claims

1. An automatic transmission apparatus of a vehicle comprising:
a transmission (3) having a reverse gear with high and low speeds, the transmission also having a normal shift mode for gear by gear shifting and a skip shift mode for plural-gear by plural-gear shifting;
a control unit (6, 9) for controlling shifting of the transmission (3);
an actuator (20, 21, 22) for shifting the transmission (3) based on a signal from the control unit (9);
a selection device (25) for selecting the skip shift mode; and
a second control unit (9) for automatically selecting the high speed reverse or low speed reverse based on selection and non-selection of the skip shift mode.

2. The automatic transmission apparatus of a vehicle as in claim 1, **characterized in that** the second control unit (9) selects the low speed reverse when the normal shift mode is selected, and selects the high speed reverse when the skip shift mode is selected.

3. The automatic transmission apparatus of a vehicle as in claim 1 or 2, **characterized in that** the selection device (25) is a manual switch.

4. The automatic transmission apparatus of a vehicle as in claim 1, 2 or 3, **characterized in that** the second control unit (9) prohibits the shifting to the reverse gear unless vehicle speed is zero.

5. The automatic transmission apparatus of a vehicle as in any one of foregoing claims, **characterized in that** the transmission (3) includes an auxiliary gear assembly (17; 19), and switching between the high and low speed reverse takes place in accordance with high and low positions of the auxiliary gear assembly (17; 19).

6. The automatic transmission apparatus of a vehicle as in claim 5, **characterized in that** the auxiliary gear assembly is a splitter gear assembly (17) located between a main gear assembly (18) and a clutch (2).

7. The automatic transmission apparatus of a vehicle as in claim 5, **characterized in that** the auxiliary gear assembly is a range gear assembly (19) located between a main gear assembly (18) and a propeller shaft.

8. For use with a transmission (3) having at least one forward gear, and a reverse gear with high and low speeds, an apparatus comprising a controller (9) for automatically selecting the high speed reverse or low speed reverse based on a shift mode of the transmission (3).

9. The apparatus as in claim 8, **characterized in that** the controller (9) selects the low speed reverse when a shift mode suitable for heavy load condition is selected, and selects the high speed reverse when a shift mode suitable for light load condition is selected.

10. The apparatus as in claim 8 or 9, **characterized in that** the shift mode is manually selected by a driver.

11. The apparatus as in claim 8, 9 or 10, **characterized in that** the controller (9) prohibits the shifting to the reverse gear unless vehicle speed is zero.

12. The apparatus as in any one of claims 8 to 11, **characterized in that** the transmission (3) includes an auxiliary gear assembly (17; 19), and switching between the high and low speed reverse takes place in accordance with high and low positions of the auxiliary gear assembly (17; 19).

13. The apparatus as in claim 12, **characterized in that** the auxiliary gear assembly is a splitter gear assembly (17) located between a main gear assembly (18) and a clutch (2).

14. The apparatus as in claim 12, **characterized in that** the auxiliary gear assembly is a range gear assembly (19) located between a main gear assembly (18) and a propeller shaft.

15. A method comprising the step of selecting a high speed reverse or low speed reverse based on a shift mode of a transmission (3).

16. The method as in claim 15, **characterized in that** the low speed reverse is selected when a shift mode suitable for heavy load condition is selected, and the high speed reverse is selected when a shift mode suitable of light load condition is selected.
